# EUROPEAN PATENT APPLICATION

(11) **EP 4 834 680 A1**
(43) Date of publication of application: **04.11.2026**
(21) Application number: 26152610.7
(22) Date of filing: 19.01.2026
(51) Int. Cl.: B60T 8/172, B60W 40/064

(54) **METHOD AND APPARATUS FOR DETERMINING ROAD ADHESION COEFFICIENT, STORAGE MEDIUM, AND ELECTRONIC DEVICE**

(30) Priority: 28.04.2025 CN 202510541550
(71) Applicant: SAIC MOTOR Corporation Limited, Shanghai 201203 (CN)
(72) Inventor: ZHOU, Yuxing, Shanghai, 201203 (CN); LIU, Shuai, Shanghai, 201203 (CN); ZHAO, Peng, Shanghai, 201203 (CN); PAN, Hao, Shanghai, 201203 (CN)
(74) Representative: Berggren Oy

(57) **Abstract**

Embodiments of the present invention provide a method and an apparatus for determining a road surface adhesion coefficient, a storage medium, and an electronic device, which are applied to the field of vehicle state observation. The method includes: acquiring (S202) an initial road surface adhesion coefficient for a target vehicle in response to the target vehicle is in a target state; determining (S204) an upper limit and a lower limit of the road surface adhesion coefficient for the target vehicle using a target algorithm, and determining a reference road surface adhesion coefficient for the target vehicle according to the upper limit and the lower limit; and minimizing (S206) a cost function corresponding to the target vehicle according to the initial road surface adhesion coefficient and the reference road surface adhesion coefficient to determine a target road surface adhesion coefficient for the target vehicle.

## Description

### Technical Field

The present invention relates to the field of vehicle state observation, and specifically, to a method and an apparatus for determining a road surface adhesion coefficient, a storage medium, and an electronic device.

### Background

The identification of a road surface adhesion coefficient is a crucial aspect in modern vehicle control technology, which aims to provide real-time road condition information for electronic control apparatuses such as an ABS (Anti-lock Braking System) and ASR (Acceleration Slip Regulation), thereby optimizing the safety and stability of vehicle operation. Currently, a common algorithm for identifying the road surface adhesion coefficient involves storing frictional characteristic curves under different road surface types in computing devices. By comparing the theoretically calculated wheel deceleration with the actually observed deceleration, the most matching curve is found to identify the current road surface type. However, this algorithm performs poorly in low-slip-rate scenarios because the characteristic differences between different road surfaces are not significant in such scenarios, making it difficult for accurate distinguishing through minor changes in deceleration, which reduces the identification accuracy and reliability.

In other words, when facing the effective estimation of untrained road surfaces and low-slip-rate conditions, the current algorithm for identifying the road surface adhesion coefficient suffers from key problems such as low accuracy and limited precision.

Currently, no effective solution has been proposed to solve the problem of low accuracy in the current method for identifying the road surface adhesion coefficient when it comes to the effective estimation of untrained road surfaces and low-slip-rate conditions in the prior art.

Therefore, it is necessary to improve the related art to overcome the defects in the related art.

### Summary

Embodiments of the present invention provide a method and an apparatus for determining a road surface adhesion coefficient, a storage medium, and an electronic device, to at least solve the problem of low accuracy in a current algorithm for identifying a road surface adhesion coefficient when it comes to the effective estimation of untrained road surfaces and low-slip-rate conditions in the prior art.

According to an embodiment of the present invention, a method for determining a road surface adhesion coefficient is provided, and includes: acquiring an initial road surface adhesion coefficient for a target vehicle in response to the target vehicle is in a target state; determining an upper limit and a lower limit of the road surface adhesion coefficient for the target vehicle using a target algorithm, and determining a reference road surface adhesion coefficient for the target vehicle according to the upper limit and the lower limit; and minimizing a cost function corresponding to the target vehicle according to the initial road surface adhesion coefficient and the reference road surface adhesion coefficient to determine a target road surface adhesion coefficient for the target vehicle.

In an exemplary embodiment, the acquiring an initial road surface adhesion coefficient for a target vehicle includes: in response to a steering system of the target vehicle adopts a first steering mode, controlling the steering system to output a target steering torque to control front wheels of the target vehicle to execute a steering motion; after the front wheels of the target vehicle execute the steering motion, acquiring a moment of inertia, an angular acceleration, a self-aligning torque, and an assist torque of the steering system; and determining a ground friction resistance torque according to the moment of inertia, the angular acceleration, the self-aligning torque, and the assist torque of the steering system, and determining the initial road surface adhesion coefficient according to the ground friction resistance torque.

In an exemplary embodiment, the first steering mode is a steer-by-wire mode, the steering system of the target vehicle is a steer-by-wire system, and the determining a ground friction resistance torque according to the moment of inertia, the angular acceleration, the self-aligning torque, and the assist torque of the steering system includes: determining the ground friction resistance torque through the following formula: ${J}_{s} α - \left({T}_{E}+{T}_{Z}\right) \approx {T}_{f} ,$ where *J*ₛ denotes the moment of inertia, *α* denotes the angular acceleration, *T*_{E} denotes the assist torque, *T*_{Z} denotes the self-aligning torque, and *T*_{f} denotes the ground friction resistance torque;
where *T*_{Z} and *T*_{f} are resistance torques having negative values in the formula, and the assist torque *T*_{E} provides a steering torque for driving the front wheels to execute the steering motion.

In an exemplary embodiment, the acquiring an initial road surface adhesion coefficient for a target vehicle includes: in response to the steering system of the target vehicle adopts a second steering mode, and after the front wheels of the target vehicle are manually controlled to execute the steering motion, acquiring a moment of inertia, an angular acceleration, a self-aligning torque, and an assist torque of the steering system, and a steering wheel torque of the target vehicle; and determining a ground friction resistance torque according to the moment of inertia, the angular acceleration, and the assist torque of the steering system and the steering wheel torque of the target vehicle, and determining the initial road surface adhesion coefficient according to the ground friction resistance torque.

In an exemplary embodiment, the determining a ground friction resistance torque according to the moment of inertia, the angular acceleration, and the assist torque of the steering system and the steering wheel torque of the target vehicle includes: determining the ground friction resistance torque through the following formula: ${J}_{s} α - \left({T}_{T}+{T}_{E}+{T}_{Z}\right) \approx {T}_{f} ,$ where *J*ₛ denotes the moment of inertia, *α* denotes the angular acceleration, *T*_{T} denotes the steering wheel torque, *T*_{E} denotes the assist torque, *T*_{Z} denotes the self-aligning torque, and *T*_{f} denotes the ground friction resistance torque.

In an exemplary embodiment, the determining the initial road surface adhesion coefficient according to the ground friction resistance torque includes: determining the initial road surface adhesion coefficient through the following formula: ${T}_{f} = \frac{f}{3} \sqrt{\frac{{G}^{3}}{P}} ,$ where *T*_{f} denotes the ground friction resistance torque, f denotes the initial road surface adhesion coefficient, G denotes an axle load of the target vehicle, and P denotes a tire pressure of the target vehicle.

In an exemplary embodiment, the determining an upper limit and a lower limit of the road surface adhesion coefficient for the target vehicle using a target algorithm includes: acquiring a wheel-end vertical load, a wheel-end longitudinal slip rate, and a tire side-slip angle of the wheels of the target vehicle, and a plurality of friction coefficients, where the plurality of friction coefficients are obtained by uniform seeding within a target friction parameter range at certain intervals; calculating a wheel-end longitudinal force corresponding to each friction coefficient according to the wheel-end vertical load, the wheel-end longitudinal slip rate, the tire side-slip angle, and the plurality of friction coefficients; determining a longitudinal force curve according to the wheel-end longitudinal force corresponding to each friction coefficient; and determining the upper limit and the lower limit of the road surface adhesion coefficient for the target vehicle according to the longitudinal force curve.

In an exemplary embodiment, the determining the upper limit and the lower limit of the road surface adhesion coefficient for the target vehicle according to the longitudinal force curve includes: determining whether self-separation is present in the longitudinal force curve; in response to self-separation is present in the longitudinal force curve, determining a target wheel-end longitudinal force of the target vehicle according to a dynamic equilibrium equation; and determining a position of the target wheel-end longitudinal force on the longitudinal force curve and determining the upper limit and the lower limit of the road surface adhesion coefficient according to this position.

In an exemplary embodiment, after determining whether self-separation is present in the longitudinal force curve, the method further includes: in response to self-separation is not present in the longitudinal force curve, determining a utilized adhesion coefficient for the target vehicle; determining distances between the utilized adhesion coefficient and respective utilized adhesion coefficients corresponding to a plurality of characteristic road surfaces; determining a characteristic road surface with the smallest distance and determining a peak adhesion coefficient of the characteristic road surface with the smallest distance; and determining the peak adhesion coefficient as the reference road surface adhesion coefficient.

In an exemplary embodiment, determining whether self-separation is present in the longitudinal force curve includes: determining a wheel-end longitudinal force corresponding to a target friction coefficient, where the target friction coefficient is one friction coefficient of the plurality of friction coefficients; calculating error values between wheel-end longitudinal forces corresponding to other friction coefficients and the wheel-end longitudinal force corresponding to the target friction coefficient, respectively, where the other friction coefficients are friction coefficients in the plurality of friction coefficients excluding the target friction coefficient; determining the number of the error values greater than a preset error value; in response to the number is greater than a preset threshold, determining that self-separation is present in the longitudinal force curve; and in response to the number is less than or equal to the preset threshold, determining that self-separation is not present in the longitudinal force curve.

In an exemplary embodiment, before minimizing a cost function corresponding to the target vehicle according to the initial road surface adhesion coefficient and the reference road surface adhesion coefficient to determine a target road surface adhesion coefficient for the target vehicle, the method further includes: establishing a measurement equation according to the dynamic model of the target vehicle; determining an observation error penalty for the cost function according to the measurement equation, determining a control input penalty for the cost function according to control inputs of the target vehicle, and determining a reference deviation penalty for the cost function according to state variables of the target vehicle; and establishing the cost function according to the observation error penalty, the control input penalty, and the reference deviation penalty.

In an exemplary embodiment, before the minimizing a cost function corresponding to the target vehicle according to the initial road surface adhesion coefficient and the reference road surface adhesion coefficient to determine a target road surface adhesion coefficient for the target vehicle, the method further includes: determining the observation error penalty term for the cost function according to an actual observed value of the target vehicle and a current road surface adhesion coefficient, determining the control input penalty term for the cost function according to input values of the target vehicle, and determining the reference deviation penalty term for the cost function according to a predicted observed value of the target vehicle and the reference road surface adhesion coefficient; and establishing the cost function according to the observation error penalty term, the control input penalty term, and the reference deviation penalty term, and establishing constraints for the cost function, where the constraints include: a state variable update constraint term, an observation model constraint term, and upper and lower limit constraint terms for the road surface adhesion coefficient.

According to another embodiment of the present invention, an apparatus for determining a road surface adhesion coefficient is provided, and includes: an acquiring module, configured to acquire an initial road surface adhesion coefficient for a target vehicle in response to the target vehicle is in a target state; a first determination module, configured to determine an upper limit and a lower limit of the road surface adhesion coefficient for the target vehicle using a target algorithm, and determine a reference road surface adhesion coefficient for the target vehicle according to the upper limit and the lower limit; and a second determine module, configured to minimize a cost function corresponding to the target vehicle according to the initial road surface adhesion coefficient and the reference road surface adhesion coefficient to determine a target road surface adhesion coefficient for the target vehicle.

According to another embodiment of the present invention, a computer-readable storage medium is further provided, and has a computer program stored therein, where the computer program is configured to perform the steps in any one of the above-mentioned method embodiments during operation.

According to yet another embodiment of the present invention, an electronic device is further provided and includes a memory and a processor, the memory has a computer program stored therein, and the processor is configured to run the computer program so as to perform the steps in any one of the above-mentioned method embodiments.

According to still another embodiment of the present invention, a computer program product is further provided, and includes a computer program. The computer program, when executed by a processor, causes the steps in any one of the above-mentioned method embodiments to be implemented.

Through the present invention, in the case where the target vehicle is in the target state, the initial road surface adhesion coefficient for the target vehicle is acquired; the upper limit and the lower limit of the road surface adhesion coefficient for the target vehicle are determined using the target algorithm, and the reference road surface adhesion coefficient for the target vehicle is determined according to the upper limit and the lower limit; and the cost function corresponding to the target vehicle is minimized according to the initial road surface adhesion coefficient and the reference road surface adhesion coefficient to determine the target road surface adhesion coefficient for the target vehicle. In the embodiments of the present invention, not only is an effective initial estimate and an upper-lower limit range provided, but also, through the introduction of a reference value and the setting of optimization objectives, it ensures that the algorithm can continuously and accurately update the estimation of the road surface adhesion coefficient under various complex and changing driving conditions, providing more reliable data support for vehicle traction control, stability control, etc. Therefore, the problem of low accuracy in the current algorithm for identifying the road surface adhesion coefficient when facing the effective estimation of the untrained road surfaces and low-slip-rate conditions can be solved.

### Brief Description of the Drawings

The drawings herein are incorporated into the specification to form a part of the specification, illustrate embodiments conforming to the present invention, and are used to explain the principle of the present invention together with the specification.

In order to more clearly illustrate the technical solutions in the embodiments of the present invention or in the prior art, the drawings used in the description of the embodiments or the prior art will be briefly described below. Apparently, those of ordinary skill in the art may still derive other drawings from these drawings without creative efforts.
Fig. 1 is a block diagram of a hardware structure of a computer device for a method for determining a road surface adhesion coefficient according to an embodiment of the present invention;
Fig. 2 is a flowchart of a method for determining a road surface adhesion coefficient according to an embodiment of the present invention;
Fig. 3 is a flowchart of adhesion coefficient estimation using a steering system during standstill according to an embodiment of the present invention;
Fig. 4 is a flowchart of a uniform seeding method and the estimation of upper and lower limits of an adhesion coefficient according to an embodiment of the present invention;
Fig. 5 is a block diagram of a fusion algorithm for adhesion coefficient estimation based on steering and vehicle dynamic models according to an embodiment of the present invention;
Fig. 6 is a force diagram of a vehicle according to an embodiment of the present invention; and
Fig. 7 is a structural block diagram of an apparatus for determining a road surface adhesion coefficient according to an embodiment of the present invention.

### Detailed Description of the Embodiments

Embodiments of the present invention are described in detail below with reference to the drawings and in conjunction with the embodiments.

It should be noted that the terms such as "first" and "second" of the specification and claims of the present invention and the above-mentioned drawings are used to distinguish similar objects but are not necessarily intended to describe specific sequences or precedence orders.

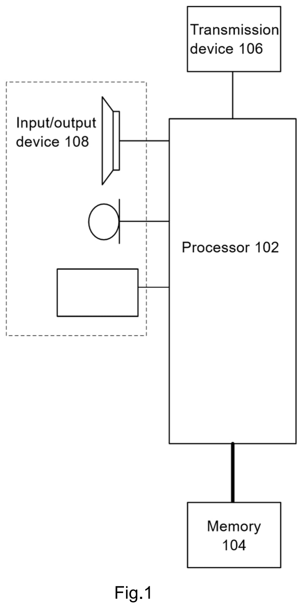

The method embodiments provided by the embodiments of the present invention may be performed in a computer device or a similar computing apparatus. Taking operation on the computer device as an example, Fig. 1 is a block diagram of a hardware structure of a computer device for a method for determining a road surface adhesion coefficient according to an embodiment of the present invention. As shown in Fig. 1, the computer device may include one or more (only one is shown in Fig. 1) processors 102 (the processor 102 may include, but is not limited to, processing apparatus such as a Micro Control Unit (MCU) or a Field Programmable Gate Array (FPGA)) and a memory 104 configured to store data, where the above-mentioned computer device may further include a transmission device 106 for a communication function and an input/output device 108.Those of ordinary skill in the art should understand that the structure shown in Fig. 1 is only illustrative and does not impose any limitations on the structure of the above-mentioned computer device. For example, the computer device may further include more or fewer components than shown in Fig. 1, or may have configurations different from those shown in Fig. 1.

It should be noted that the above-mentioned computer device may be understood as an onboard device in a vehicle.

The memory 104 may be configured to store computer programs, such as software programs and modules of application software and a computer program corresponding to the method for determining a road surface adhesion coefficient in the embodiments of the present invention. The processor 102 performs various functional applications and data processing by running the computer programs stored in the memory 104, thereby implementing the above-mentioned method. The memory 104 may include a high-speed random access memory, and may also include a non-volatile memory, such as one or more magnetic storage apparatuses, flash memories, or other nonvolatile solid-state memories. In some examples, the memory 104 may further include memories located remotely from the processor 102 and may be connected to the computer device through networks. The examples of the above-mentioned networks include, but are not limited to, Internet, an intranet, a local area network, a mobile communication network, and a combination thereof.

The transmission device 106 is configured to receive or transmit data via a network. A specific example of the above-mentioned networks may include a wireless network provided by a communication supplier of the computer device. In an example, the transmission device 106 includes a network interface controller (NIC for short) which may be connected with other network devices through a base station so as to communicate with the Internet. In an example, the transmission device 106 may be a radio frequency (RF for short) module configured to communicate with the Internet in a wireless manner.

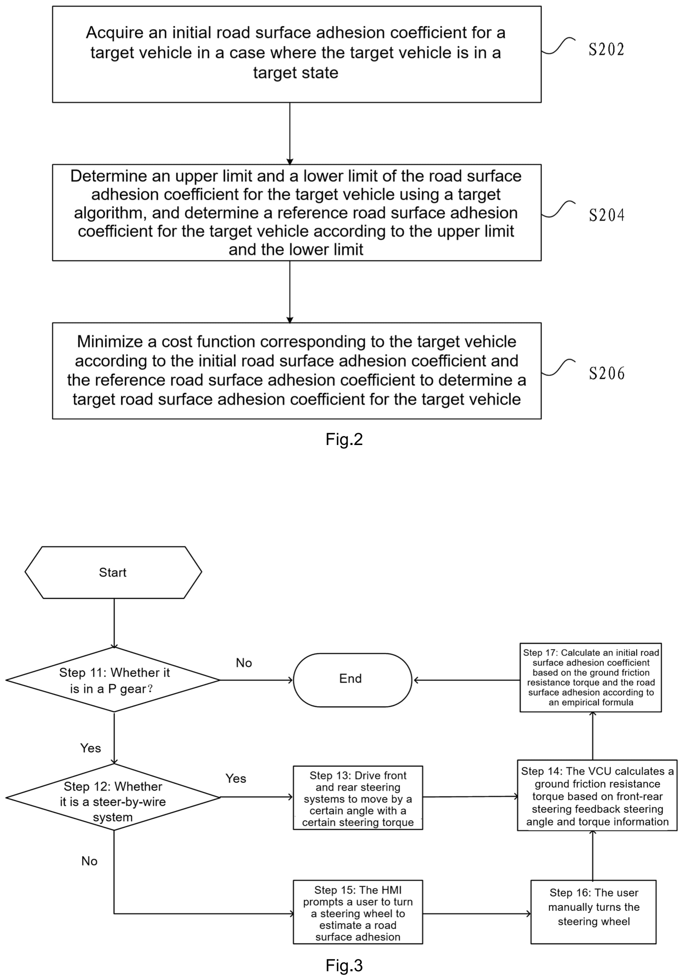

The present embodiment provides the method for determining a road surface adhesion coefficient. Fig. 2 is a flowchart of a method for determining a road surface adhesion coefficient according to an embodiment of the present invention. As shown in Fig. 2, the process includes the following steps:
Step S202: Acquire an initial road surface adhesion coefficient for a target vehicle in a case where the target vehicle is in a target state.

When the target vehicle is in the target state (e.g., a stationary or a specific initial driving state), the initial road surface adhesion coefficient is first acquired through a simple and rapid method (e.g., estimation based on a steering resistance torque). Therefore, a reasonable starting point is provided for a cost function, thereby avoiding the problem of ineffective estimation due to insufficient differentiation under low-slip-rate conditions.

Step S204: Determine an upper limit and a lower limit of the road surface adhesion coefficient for the target vehicle using a target algorithm, and determine a reference road surface adhesion coefficient for the target vehicle according to the upper limit and the lower limit.

The upper limit and the lower limit of the road surface adhesion coefficient for the target vehicle are determined using the target algorithm (e.g., a uniform seeding method combined with a full-vehicle dynamic model).The method based on a theoretical model and actual observation data in the step S204 can also provide an estimated range even on untrained road surfaces or in low-slip-rate scenarios, thereby avoiding the limitations of algorithms that rely solely on a single model or signal feature.

Based on the upper limit and the lower limit, the reference road surface adhesion coefficient is determined. In the scenario with a low slip rate, the reference value may be acquired by comparing a currently utilized adhesion coefficient with a utilized adhesion coefficient of a characteristic road surface. Under steering conditions, an adhesion coefficient estimation based on a steering self-aligning torque is employed. The introduction of the reference value provides a reference for the cost function, ensuring that the algorithm has a reliable basis for estimation even under conditions with low differentiation.

Step S206: Minimize the cost function corresponding to the target vehicle according to the initial road surface adhesion coefficient and the reference road surface adhesion coefficient to determine a target road surface adhesion coefficient for the target vehicle.

Finally, with the initial road surface adhesion coefficient and the reference road surface adhesion coefficient as constraints, combined with actual measured vehicle dynamic data (e.g., an acceleration and a yaw angular acceleration), the cost function is minimized using a MHE (Moving Horizon Estimation) algorithm. The cost function not only considers observation errors and the smoothness of control inputs but also introduces penalty terms for deviations between state estimates and the reference value. The MHE algorithm comprehensively considers a plurality of information sources during estimation, including but not limited to a front-wheel steering torque, tire model predictions, and a full-vehicle kinematic model, thereby achieving more accurate road surface adhesion coefficient estimates under various conditions, especially on untrained road surfaces and in low-slip-rate scenarios.

Through the above-mentioned steps, in the case where the target vehicle is in the target state, the initial road surface adhesion coefficient for the target vehicle is acquired; the upper limit and the lower limit of the road surface adhesion coefficient for the target vehicle are determined using the target algorithm, and the reference road surface adhesion coefficient for the target vehicle is determined according to the upper limit and the lower limit; and the cost function corresponding to the target vehicle is minimized according to the initial road surface adhesion coefficient and the reference road surface adhesion coefficient to determine the target road surface adhesion coefficient for the target vehicle. In the embodiment of the present invention, not only are an effective initial estimate and an upper-lower limit range provided, but also, through the introduction of the reference value and the setting of optimization objectives, it ensures that the algorithm can continuously and accurately update the estimation of the road surface adhesion coefficient under various complex and changing driving conditions, providing more reliable data support for vehicle traction control, stability control, etc. Therefore, the problem of low accuracy in the current algorithm for identifying the road surface adhesion coefficient when facing the effective estimation of the untrained road surfaces and low-slip-rate conditions can be solved.

Optionally, the step S202 may be implemented through the following manner: in a case where a steering system of the target vehicle adopts a first steering mode, controlling the steering system to output a target steering torque to control front wheels of the target vehicle to execute a steering motion; after the front wheels of the target vehicle execute the steering motion, acquiring a moment of inertia, an angular acceleration, a self-aligning torque, and an assist torque of the steering system; and determining a ground friction resistance torque according to the moment of inertia, the angular acceleration, the self-aligning torque, and the assist torque of the steering system, and determining the initial road surface adhesion coefficient according to the ground friction resistance torque.

In the embodiment of the present invention, first, it is detected whether the steering system of the target vehicle is a steer-by-wire or EPS (Electric Power Steering) system, namely the first steering mode. If the steering system supports this control mode, the system automatically controls the steering system to output the target steering torque, promoting the front wheels to execute the steering motion. That is, a dynamic operating condition under which road surface friction can be observed is created while the vehicle is stationary.

After the front wheels execute the steering motion, key dynamic parameters such as the moment of inertia, the angular acceleration, the self-aligning torque, and the assist torque of the steering system are collected by a VCU (Vehicle Control Unit) of the vehicle. The moment of inertia reflects a capability of the steering system to resist changes in angular acceleration, while the angular acceleration is directly related to an effect of the steering torque. The self-aligning torque and the assist torque reflect resistance and assistance provided by the road surface and the steering system to the steering motion, respectively.

Based on the collected dynamic parameters, the system calculates the ground friction resistance torque. The magnitude of the friction resistance torque directly reflects frictional characteristics of the road surface, namely, a level of the road surface adhesion coefficient.

Finally, the initial road surface adhesion coefficient is determined according to the calculated ground friction resistance torque, combined with empirical formulas or mathematical models of tires and road surfaces. The initial road surface adhesion coefficient helps the algorithm quickly find a reasonable estimated range and reference value.

Through the above-mentioned process, the initial road surface adhesion coefficient can be effectively acquired through dynamic characteristics of the steering system when the vehicle is stationary, solving the problem of low estimation accuracy in existing algorithms on untrained road surfaces and in low-slip-rate scenarios. The method not only incurs low costs but also provides a favorable starting point for subsequent road surface adhesion coefficient estimation during the initial stage of vehicle startup or under specific operating conditions, such as turning in place, thereby enhancing the robustness and accuracy of the entire estimation algorithm.

Optionally, the first steering mode is a steer-by-wire mode, the steering system of the target vehicle is a steer-by-wire system, and the determining a ground friction resistance torque according to the moment of inertia, the angular acceleration, the self-aligning torque, and the assist torque of the steering system includes: determining the ground friction resistance torque through the following formula: ${J}_{s} α - \left({T}_{E}+{T}_{Z}\right) \approx {T}_{f} ,$ where *J*ₛ denotes the moment of inertia, *α* denotes the angular acceleration, *T*_{E} denotes the assist torque, *T*_{Z} denotes the self-aligning torque, and *T*_{f} denotes the ground friction resistance torque;
where *T*_{Z} and *T*_{f} are resistance torques having negative values in the formula, and the assist torque *T*_{E} provides a steering torque for driving the front wheels to execute the steering motion.

The moment of inertia is a physical quantity that measures an object's resistance to changes in rotational acceleration. For the steering system, it reflects the overall resistance to the angular acceleration of components such as a steering wheel, a steering gear shaft, and a steering knuckle arm. In the formula, *J*ₛ reflects a rotational effect of the steering system under the action of the angular acceleration.

The angular acceleration is a rate of change of angular velocity of the steering system per unit time, describing the change in rotational speed of the steering system in response to the steering torque.

When the front wheels rotate, the frictional interaction between the road surface and the tires may generate a torque that attempts to restore the tires to a straight-line state, known as the self-aligning torque, which is closely related to the frictional characteristics of the road surface.

The assist torque is a torque provided by the EPS (Electric Power Steering) system or the steer-by-wire system to assist a driver in steering. During steering assist tests in a stationary state, the assist torque is an active torque applied to the steering system.

The ground friction resistance torque is a resistance encountered by the steering system from the road surface during steering, which is determined by adhesion characteristics between the tires and the road surface. When the vehicle is stationary, this resistance torque may be indirectly estimated through dynamic analysis of the steering system, thereby inferring the road surface adhesion coefficient.

In an exemplary embodiment, acquiring an initial road surface adhesion coefficient for the target vehicle includes: after the steering system of the target vehicle adopts a second steering mode and the front wheels of the target vehicle are manually controlled to execute the steering motion, acquiring a moment of inertia, an angular acceleration, a self-aligning torque, and an assist torque of the steering system, and a steering wheel torque of the target vehicle; and determining a ground friction resistance torque according to the moment of inertia, the angular acceleration, and the assist torque of the steering system and the steering wheel torque of the target vehicle, and determining the initial road surface adhesion coefficient according to the ground friction resistance torque.

When the vehicle steering system adopts the second steering mode of non-steer-by-wire or non-electric power steering, the driver manually turns the steering wheel to drive the front wheels of the vehicle to execute the steering motion. In this case, the moment of inertia, the angular acceleration, the assist torque, and the self-aligning torque in the steering system and the steering wheel torque applied by the driver may all be measured and recorded in real time through vehicle sensors and a control unit.

Under manual steering conditions, a total torque during steering may be expressed as the sum of the steering wheel torque applied by the driver and the assist torque, which is used to overcome the resistance generated by the moment of inertia of the steering system, as well as the self-aligning torque and the ground friction resistance torque. By establishing a dynamic equilibrium equation, the ground friction resistance torque may be calculated. The specific equation is as follows: ${J}_{s} α - \left({T}_{T}+{T}_{E}+{T}_{Z}\right) \approx {T}_{f} ,$ where *J*ₛ denotes the moment of inertia, *α* denotes the angular acceleration, *T*_{T} denotes the steering wheel torque, *T*_{E} denotes the assist torque, *T*_{Z} denotes the self-aligning torque, and *T*_{f} denotes the ground friction resistance torque.

That is, the ground friction resistance torque may be determined by the steering wheel torque, the assist torque, and the self-aligning torque, and a product of the moment of inertia and the angular acceleration of the steering system.

Once the ground friction resistance torque is acquired, it may then be converted into an estimate of the initial road surface adhesion coefficient using known physical models or empirical formulas. The ground friction resistance torque is determined based on the following formula: ${T}_{f} = \frac{f}{3} \sqrt{\frac{{G}^{3}}{P}} ,$ where *T*_{f} denotes the ground friction resistance torque, f denotes the initial road surface adhesion coefficient, G denotes an axle load of the target vehicle, and P denotes a tire pressure of the target vehicle.

It should be noted that the ground friction resistance torque, obtained by measuring the dynamic characteristics of the steering system in the stationary state, mainly reflects the magnitude of a friction torque between the tires and the road surface.

The axle load of the target vehicle may be estimated according to a total vehicle mass and load distribution. The magnitude of the axle load affects a pressure on a contact area between the tires and the ground, thereby indirectly influencing the magnitude of the friction force.

The tire pressure of the target vehicle has a direct impact on tire deformation and the contact area. The level of the tire pressure may change the frictional characteristics between the tires and the ground.

In the stationary state, the ground friction resistance torque is mainly generated by the friction force between the tires and the road surface. A relationship between the friction force F and the axle load G may be expressed as: *F* = f * *G*.

A relationship between the contact area A and the tire pressure P may be expressed as: $A = K * \frac{G}{P}$ and *A = π * r²*, where r denotes a contact radius, and K denotes a constant related to a tire size and material characteristics.

Therefore, a relationship between the contact radius r and the tire pressure P may be expressed as: $r = \sqrt{\frac{K * G}{π * P}}$, and according to the definition of the friction torque, the friction torque T_{f} is equal to the friction force F multiplied by the contact radius r: *T_{f}* = *F*r*.

Expressions for F and r are substituted into the above-mentioned formula: ${T}_{f} = \left(f*G\right) * \sqrt{\frac{K * G}{π * P}}$.

For ease of calculation and understanding, the above-mentioned formula is further adjusted in terms of weight to obtain the following form: ${T}_{f} = \frac{f}{3} \sqrt{\frac{{G}^{3}}{P}}$.

According to the embodiment of the present invention, the dynamic data of the steering system of the vehicle in the stationary state and known vehicle parameters (e.g., the axle load and the tire pressure) are effectively utilized. By calculating the ground friction resistance torque, the initial road surface adhesion coefficient is estimated, providing an important starting value for subsequent more complex and precise algorithms for estimating the road surface adhesion coefficient.

In the embodiment of the present invention, through a manual steering motion of the driver, combined with the dynamic parameters of the steering system and static parameters of the vehicle (the axle load and the tire pressure), a method for acquiring the initial road surface adhesion coefficient in a non-steer-by-wire steering system is provided. Meanwhile, the defects of the prior art when facing the untrained road surfaces and low-slip-rate conditions are overcome, providing more reliable data support for vehicle stability control under complex road conditions.

Optionally, determining an upper limit and a lower limit of the road surface adhesion coefficient for the target vehicle using a target algorithm includes: acquiring a wheel-end vertical load, a wheel-end longitudinal slip rate, and a tire side-slip angle of the wheels of the target vehicle, and a plurality of friction coefficients, where the plurality of friction coefficients are obtained by uniform seeding within a target friction parameter range at certain intervals; calculating a wheel-end longitudinal force corresponding to each friction coefficient according to the wheel-end vertical load, the wheel-end longitudinal slip rate, the tire side-slip angle, and the plurality of friction coefficients; determining a longitudinal force curve according to the wheel-end longitudinal force corresponding to each friction coefficient; and determining the upper limit and the lower limit of the road surface adhesion coefficient for the target vehicle according to the longitudinal force curve.

In the embodiment of the present invention, first, key parameters such as the wheel-end vertical load, the wheel-end longitudinal slip rate, and the tire side-slip angle of the wheels of the target vehicle need to be collected. The vertical load reflects a vertical pressure at a contact point between the tire and the road surface. The longitudinal slip rate describes a relative sliding degree between the tire and the road surface during a longitudinal motion, while the side-slip angle represents a deflection angle caused by lateral forces on the tire.

Within the target friction parameter range (e.g., from 0.1 to 1.1), the system performs uniform seeding at certain intervals to obtain a plurality of friction coefficient values. These seeded friction coefficients are used for subsequent tire model calculations, aiming to determine an estimated range of the road surface adhesion coefficient by observing differences in tire longitudinal forces under various friction coefficients. Each seeded friction coefficient represents a hypothetical value of potential road surface frictional characteristics.

Based on the collected wheel-end vertical load, wheel-end longitudinal slip rate, and tire side-slip angle, and a plurality of preset friction coefficients, the system uses a tire model (e.g., an HSRI model) to calculate the wheel-end longitudinal force corresponding to each friction coefficient. The tire model is a mathematical description based on tire mechanical characteristics. By inputting the tire load, the slip rate, the side-slip angle, and the assumed friction coefficient, information such as longitudinal and lateral forces of the tire under different operating conditions can be output.

Through the above-mentioned calculations, the system obtains a set of wheel-end longitudinal forces corresponding to different friction coefficients and subsequently plots the longitudinal force curve. This curve reflects a dependency relationship between the tire longitudinal force and the friction coefficient under specific load, slip rate, and side-slip angle conditions.

By analyzing the longitudinal force curve, the system can determine which seeded friction coefficients are closest to an actual value of the current tire longitudinal force. Under low-slip-rate conditions, the curve may be flat, with insignificant differences in longitudinal forces corresponding to different friction coefficients. In this case, the upper and lower limits of the adhesion coefficient may be broad. As the slip rate increases, the curves begin to separate, and the differences in longitudinal forces corresponding to different friction coefficients gradually increase. The system can more precisely determine a friction coefficient range that best matches the current tire longitudinal force, thereby determining the upper limit and the lower limit of the road surface adhesion coefficient.

Through the above-mentioned steps, the estimated range of the road surface adhesion coefficient based on the tire model and vehicle dynamic parameters can be provided for an electronic control system of the vehicle. Especially during the initial startup of the vehicle or under complex road conditions, an accurate estimation of the road surface adhesion coefficient can assist a vehicle controller in more rapidly adjusting strategies such as traction distribution and braking force distribution, preventing vehicle loss of control and ensuring safe driving.

In an exemplary embodiment, determining an upper limit and a lower limit of the road surface adhesion coefficient for the target vehicle according to the longitudinal force curve includes: determining whether self-separation is present in the longitudinal force curve; in a case where self-separation is present in the longitudinal force curve, determining a target wheel-end longitudinal force of the target vehicle according to the dynamic equilibrium equation; and determining a position of the target wheel-end longitudinal force on the longitudinal force curve and determining the upper limit and the lower limit of the road surface adhesion coefficient according to this position.

The tire longitudinal force curve describes a relationship between the longitudinal force (traction or braking force) generated by the tire at different slip rates and the road surface adhesion coefficient. On low-adhesion-coefficient road surfaces, the longitudinal force of the tire decreases as the slip rate increases, whereas on high-adhesion-coefficient road surfaces, the variation in the longitudinal force is more gradual. Therefore, if a significant difference, namely the self-separation phenomenon, occurs in the longitudinal force curve at a certain slip rate, it indicates that the force performance of the tire under different adhesion coefficients begins to differ markedly.

The dynamic equilibrium equation serves as a foundation for analyzing vehicle kinematics and dynamics. Based on Newton's second law, it describes relationships among parameters such as the tire longitudinal force, the tire slip rate, and the wheel angular acceleration. After determining self-separation in the longitudinal force curve, the target wheel-end longitudinal force of the target vehicle under a current operating condition is calculated through the dynamic equilibrium equation.

Once the target wheel-end longitudinal force is acquired, the next step is to locate a position corresponding to this force value within a preset tire longitudinal force curve set. If this force value falls between longitudinal force curves within a certain range, adhesion coefficients within this range are estimated upper and lower limits that can be considered.

Based on the position of the target wheel-end longitudinal force within the longitudinal force curve, the upper limit and the lower limit of the road surface adhesion coefficient may be determined. Specifically, if the target wheel-end longitudinal force is located within a specific separation region of the curve, the adhesion coefficient range of this region is the estimated range of the road surface adhesion coefficient for the target vehicle. For example, if a target longitudinal force lies precisely between separation points of 0.3 and 0.7 adhesion coefficient curves, the upper limit of the adhesion coefficient may be 0.7, and the lower limit may be 0.3.

In an exemplary embodiment, after determining whether self-separation is present in the longitudinal force curve, the method further includes: in a case where self-separation is not present in the longitudinal force curve, determining a utilized adhesion coefficient for the target vehicle; determining distances between the utilized adhesion coefficient and respective utilized adhesion coefficients corresponding to a plurality of characteristic road surfaces; determining a characteristic road surface with the smallest distance and determining a peak adhesion coefficient of the characteristic road surface with the smallest distance; and determining the peak adhesion coefficient as the reference road surface adhesion coefficient.

The utilized adhesion coefficient represents an actual adhesion capability between the tires and the road surface exhibited by the vehicle during operation, typically estimated by a ratio of the tire longitudinal force to the tire vertical load. Under operating conditions where the longitudinal force curve does not exhibit self-separation, the system first calculates and determines a current utilized adhesion coefficient value for the target vehicle, which is determined based on real-time vehicle monitoring data (e.g., the tire longitudinal force and the tire load).

The system pre-stores the utilized adhesion coefficients for the plurality of characteristic road surfaces, these characteristic road surfaces may include dry asphalt, wet asphalt, snow-covered ground, icy ground, etc., and each road surface has a specific range of utilized adhesion coefficients. The system compares the utilized adhesion coefficient for the target vehicle with these preset utilized adhesion coefficients for the characteristic road surface and calculates distances between them. The "distance" may be a Euclidean distance, a Mahalanobis distance, etc., and is used to quantify similarities between the utilized adhesion coefficient for the target vehicle and the utilized adhesion coefficients for the characteristic road surfaces.

After calculating the "distances" to all the characteristic road surfaces, the system selects the characteristic road surface with the smallest distance as a reference that most closely matches a current vehicle driving condition. That is, the current utilized adhesion coefficient for the target vehicle is closest to the utilized adhesion coefficient for this characteristic road surface, reflecting a potential road surface type the vehicle travels on under the current operating condition.

Finally, the system determines the peak adhesion coefficient corresponding to the characteristic road surface with the smallest distance as the reference road surface adhesion coefficient. The peak adhesion coefficient represents a maximum adhesion capability that the tires and the road surface can provide under ideal conditions, and is typically higher than the utilized adhesion coefficient during actual driving.

In the embodiment of the present invention, even under challenging operating conditions where the longitudinal force curve does not exhibit self-separation (e.g., low slip rate or steering conditions), by comparing the utilized adhesion coefficient with the characteristic road surfaces, the reasonable reference road surface adhesion coefficient can still be effectively determined, thereby providing critical input for an electronic stability control system of the vehicle, and optimizing driving performance and safety of the vehicle under complex road conditions.

In an exemplary embodiment, determining whether self-separation is present in the longitudinal force curve includes: determining a wheel-end longitudinal force corresponding to a target friction coefficient, where the target friction coefficient is one friction coefficient of the plurality of friction coefficients; calculating error values between wheel-end longitudinal forces corresponding to other friction coefficients and the wheel-end longitudinal force corresponding to the target friction coefficient, respectively, where the other friction coefficients are friction coefficients in the plurality of friction coefficients excluding the target friction coefficient; determining the number of the error values greater than a preset error value; in a case where the number is greater than a preset threshold, determining that self-separation is present in the longitudinal force curve; and in a case where the number is less than or equal to the preset threshold, determining that self-separation is not present in the longitudinal force curve.

First, one of the plurality of preset friction coefficients is selected as the "target friction coefficient". This selection may be random or based on certain rules (e.g., selecting a median or maximum value).The target friction coefficient serves as a foundation for subsequent error calculations and curve self-separation determination.

For the selected target friction coefficient, the corresponding wheel-end longitudinal force is determined. The wheel-end longitudinal forces under the remaining other friction coefficients are compared with the wheel-end longitudinal force under the target friction coefficient to calculate the error values. The error values may be calculated as either absolute errors or relative errors, with the aim of quantifying the differences in longitudinal forces under different adhesion coefficient assumptions.

The number of the error values that are greater than a preset error threshold is counted. If the number of the error values greater than the preset error threshold exceeds the preset threshold (i.e., a preset separation determination criterion), it is determined that self-separation is present in the longitudinal force curve. It indicates that, under the current vehicle operating condition, the tire longitudinal forces under different adhesion coefficient assumptions begin to differ markedly, and the curves begin to exhibit a trend of separation, providing important clues for subsequent estimation of the peak adhesion coefficient. Conversely, if the number of the error values greater than the preset error threshold is less than or equal to the preset threshold, it is considered that self-separation is not present in the longitudinal force curve. In this case, the differences between the curves are insufficient to effectively distinguish different adhesion coefficients through longitudinal force curve separation, and other strategies (e.g., an estimation based on the utilized adhesion coefficient) may be required to determine a preliminary estimated range for the peak adhesion coefficient.

Through the embodiment of the present invention, the system can effectively determine whether the self-separation phenomenon is present in the longitudinal force curve based on variation characteristics of the tire longitudinal forces, thereby helping the system, under operating conditions where the observability of the tire model on the adhesion coefficients is weak (e.g., the low-slip-rate scenario), to use other information sources such as the steering system and the vehicle dynamic model to assist in estimation, and thus improving the accuracy and reliability of road surface adhesion coefficient estimation.

In an exemplary embodiment, before minimizing a cost function corresponding to the target vehicle according to the initial road surface adhesion coefficient and the reference road surface adhesion coefficient to determine a target road surface adhesion coefficient for the target vehicle, the method further includes: establishing a measurement equation according to the dynamic model of the target vehicle; determining an observation error penalty for the cost function according to the measurement equation, determining a control input penalty for the cost function according to control inputs of the target vehicle, and determining a reference deviation penalty for the cost function according to state variables of the target vehicle; and establishing the cost function according to the observation error penalty, the control input penalty, and the reference deviation penalty.

Optionally, the observation error penalty term for the cost function is determined according to an actual observed value of the target vehicle and the current road surface adhesion coefficient, the control input penalty term for the cost function is determined according to input values of the target vehicle, and the reference deviation penalty for the cost function is determined according to a predicted observed value of the target vehicle and the reference road surface adhesion coefficient; the cost function is established according to the observation error penalty term, the control input penalty term, and the reference deviation penalty term, and establishing constraints for the cost function, where the constraints include: a state variable update constraint term, an observation model constraint term, and upper and lower limit constraint terms for the road surface adhesion coefficient.

The cost function and the constraints for the cost function include: ${J}_{N} \left(x, u\right) = {\sum }_{i = k - N}^{k} {\left‖y\left(i\right)-h\left(x\left(i\right)\right)\right‖}_{R}^{2} + {\sum }_{i = k - N}^{k - 1} {\left‖u\left(i\right)\right‖}_{Q}^{2} + {\sum }_{i = k - N}^{k} {\left‖x\left(i\right)-{x}_{Base}\left(i\right)\right‖}_{P}^{2} ;$ ${minJ}_{N} \left(x, u\right) ;$ $s . t : x \left(k+1\right) = x \left(k-N\right) + {\sum }_{i = k - N}^{k} u \left(i\right) ;$ $y \left(k\right) = h \left(x\left(k\right)\right) + {v}_{y} ;$ $\left[\begin{matrix}{μ}_{l _ min} \\ {μ}_{r _ min}\end{matrix}\right] \leq x \left(k+1\right) \leq \left[\begin{matrix}{μ}_{l _ max} \\ {μ}_{r _ max}\end{matrix}\right] ,$ where *J_{N}*(*x,u*) denotes the cost function, *y*(*i*) denotes the actual observed value for the target vehicle, *h*(*x*(*i*)) denotes the observed value of the target vehicle that is predicted according to the current road surface adhesion coefficient x(i) for the target vehicle, *x*(*k* - *N*) denotes the initial road surface adhesion coefficient, *xᵢ* = *x*_{*i-*1} *+ uᵢ*(*i = k - N +* 1 ... *k*), N denotes a time window, i denotes a sampling instant, R denotes a weight matrix for the observation error penalty, *u*(*i*) denotes an input value of the target vehicle, Q denotes a weight matrix for the control input penalty, *x_{Base}*(*i*) denotes the reference road surface adhesion coefficient, P denotes a weight matrix for the reference deviation penalty, *v_{y}* denotes observation noise, *µ_{l_min}* denotes a lower limit of a road surface adhesion coefficient for a first tire of the target vehicle, *µ_{l_max}* denotes an upper limit of the road surface adhesion coefficient for the first tire of the target vehicle, *µ_{r_min}* denotes a lower limit of a road surface adhesion coefficient for a second tire of the target vehicle, and *µ_{r_max}* denotes an upper limit of the road surface adhesion coefficient for the second tire of the target vehicle. The upper limit and the lower limit of the road surface adhesion coefficient for the target vehicle include: the lower limit and the upper limit of the road surface adhesion coefficient for the first tire of the target vehicle, and the lower limit and the upper limit of the road surface adhesion coefficient for the second tire of the target vehicle.

The measurement equation serves as a foundation for comparing a model-predicted output with the actual observed value, describing a mathematical relationship between system state variables and observed quantities. In the embodiment of the present invention, the measurement equation is established based on the dynamic model of the target vehicle, including a longitudinal acceleration, a lateral acceleration, and a yaw angular acceleration of the entire vehicle. These measured values may be acquired through an Inertial Measurement Unit (IMU) sensor or other sensors of the vehicle.

The observation error penalty reflects a discrepancy between a model-predicted value and the actual observed value, constituting a crucial component of the cost function. In the embodiment of the present invention, the observation error penalty is calculated based on a deviation between predicted measured values in the measurement equation and actual measured values. A larger deviation results in a greater observation error penalty, prompting an optimization algorithm to approach actual observation data as closely as possible when seeking an optimal solution, thereby enhancing the accuracy of model predictions. The observation error penalty term is typically multiplied by a weight matrix to adjust relative importance of different observation errors during the optimization process.

The control input penalty is another key component of the cost function, which is calculated based on the control inputs of the vehicle (e.g., a wheel-end driving force and a braking force).A primary objective of the control input penalty is to prevent overly aggressive control strategies, and to reduce unnecessary control actions, thereby avoiding unstable vehicle behaviors or resource wastage. In the optimization algorithm, a small control input penalty helps maintain smooth vehicle operation and enhance driving comfort. This penalty term is typically multiplied by a weight matrix to adjust the importance of the control inputs in the optimization objectives.

The reference deviation penalty is yet another element in the cost function, measuring a deviation between the state variables (e.g., the road surface adhesion coefficient) and the reference value (i.e., the initial road surface adhesion coefficient or the reference road surface adhesion coefficient). This penalty term is introduced to constrain the system state within a reasonable range, preventing estimated values from deviating excessively from actual values. The reference deviation penalty term is typically multiplied by a weight matrix to adjust a weight of a reference deviation in the optimization objectives, ensuring that an estimated result of the peak adhesion coefficient closely aligns with the observation data while conforming to prior knowledge or initial estimates.

The cost function combines the above-mentioned observation error penalty, control input penalty, and reference deviation penalty to guide an optimization direction of the MHE (Moving Horizon Estimation) algorithm. An expression for the cost function is as follows: ${J}_{N} \left(x, u\right) = {\sum }_{i = k - N}^{k} {\left‖y\left(i\right)-h\left(x\left(i\right)\right)\right‖}_{R}^{2} + {\sum }_{i = k - N}^{k - 1} {\left‖u\left(i\right)\right‖}_{Q}^{2} + {\sum }_{i = k - N}^{k} {\left‖x\left(i\right)-{x}_{Base}\left(i\right)\right‖}_{P}^{2} .$

The cost function seeks an optimal state variable x and a control input u by minimizing *J_{N}*(*x*, *u*). This optimization process aims to enhance model prediction accuracy, maintain the stability of the control strategy, and ensure consistency between an estimated state variable value and a reference state variable. By dynamically adjusting the weight matrix, a proportion of each penalty term in the cost function may be flexibly adjusted according to real-time operating conditions and control requirements of the vehicle, thereby ensuring that the algorithm can effectively estimate the target road surface adhesion coefficient in different scenarios, and thus optimizing a dynamic control strategy of the vehicle and improving driving safety and comfort.

The constraints for the cost function are: $x \left(k+1\right) = x \left(k-N\right) + {\sum }_{i = k - N}^{k} u \left(i\right) ;$$y \left(k\right) = h \left(x\left(k\right)\right) + {v}_{y} ;$ and $\left[\begin{matrix}{μ}_{l _ min} \\ {μ}_{r _ min}\end{matrix}\right] \leq x \left(k+1\right) \leq \left[\begin{matrix}{μ}_{l _ max} \\ {μ}_{r _ max}\end{matrix}\right] .$

To better understand the process of the above-mentioned method for determining a road surface adhesion coefficient, the following provides a description of the process of the above-mentioned method for implementing the determination of the road surface adhesion coefficient in conjunction with optional embodiments, without limiting the technical solutions of the embodiments of the present invention.

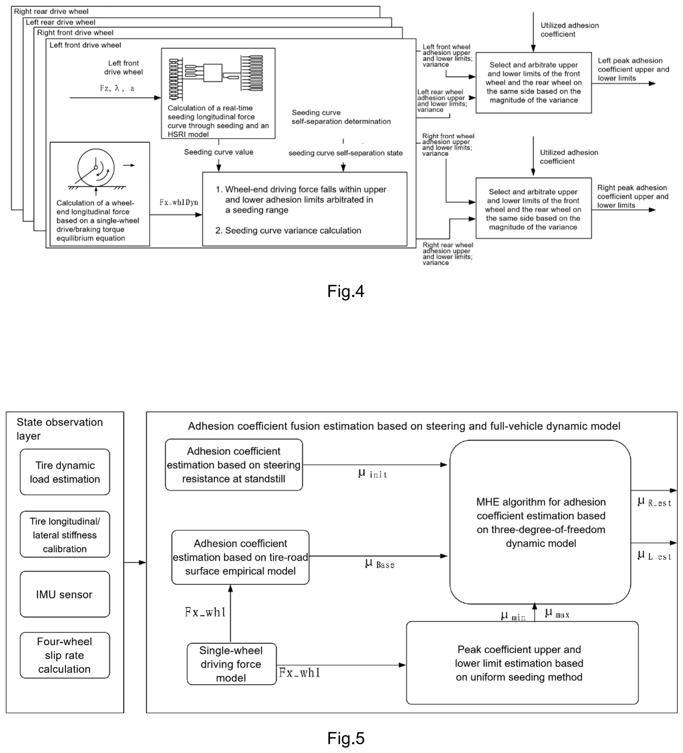

The present embodiment provides a method for determining a road surface adhesion coefficient. As shown in Fig. 5, the following steps are specifically included:
Step 1: Estimate the adhesion coefficient using a steering assist system when a vehicle is stationary.

A specific implementation method is shown in Fig. 3, including:
Step 11: Determine whether the vehicle is in a P gear. If the vehicle is in the P gear, proceed to a subsequent step 12; or otherwise, exit the function.
Step 12: Determine whether a current steering system is a steer-by-wire system, where if yes, proceed to step 13; or otherwise, proceed to step 15.
Step 13: If the steering system is the steer-by-wire system, automatically control a front steering system to output a steering torque to drive the steering system to move, for probing a road surface steering resistance.
Step 14: The VCU uses the formula *Jₛα -* (*T*_{E} + *T_{Z}*) ≈ *T*_{f} to calculate a ground friction resistance torque based on a front steering rotation process, where *J*ₛ denotes the moment of inertia, *α* denotes the angular acceleration, *T*_{E} denotes the assist torque, *T*_{Z} denotes the self-aligning torque, and *T*_{f} denotes the ground friction resistance torque.

It should be noted that front and rear steering angles, steering angle change rates, and the steering torque can be collected and transmitted by front and rear steering controllers. The self-aligning torque is empirically calibrated, the moment of inertia of the steering system is measured from the actual vehicle, and the steering angular acceleration of the steering system is derived through differentiation of the steering angle change rate.

Step 15: If the steering system is a non-steer-by-wire system, prompt the driver via a HMI (Human Machine Interface) to turn the steering wheel to estimate road surface adhesion.

Step 16: A user manually turns the steering wheel.

The VCU uses the formula *Jₛα -* ( *T*_{T} *+ T*_{E} + *T*_{Z}) ≈ *T*_{f} to calculate a ground friction resistance torque based on the process of the user turning the steering wheel, where *J*ₛ denotes the moment of inertia, *α* denotes the angular acceleration, *T*_{T} denotes the steering wheel torque, *T*_{E} denotes the assist torque, *T*_{Z} denotes the self-aligning torque, and *T*_{f} denotes the ground friction resistance torque.

The front and rear steering angles, the steering angle change rates, the torque applied by the driver to the steering wheel, and the steering torque can be collected and transmitted by front and rear steering controllers. The self-aligning torque is estimated through empirical calibration, the moment of inertia of the steering system is obtained through actual vehicle measurement, and the steering angular acceleration of the steering system is derived through differentiation of the steering angle change rate.

Step 17: After calculating the ground friction resistance torque *T*_{f}, calculate an initial road surface adhesion coefficient through a semi-empirical formula, where the semi-empirical formula is ${T}_{f} = \frac{f}{3} \sqrt{\frac{{G}^{3}}{P}}$, *T*_{f} denotes the ground friction resistance torque, f denotes the initial road surface adhesion coefficient, G denotes an axle load of the target vehicle, and P denotes a tire pressure of the target vehicle.

The axle load may be approximately estimated through a vehicle kerb weight and front-rear load distribution, while the tire pressure may be obtained through a tire pressure sensor.

It should be noted that: a driving torque applied to the steering system is composed of the torque *T*_{T} applied by the driver to the steering wheel and a front steering assist torque *T*_{E}; the resistance torque on the steering system is composed of the self-aligning torque *T*_{Z} of the steering system and the ground friction resistance torque *T*_{f}; and the moment of inertia of the front steering system is *J*ₛ, and the angular acceleration of the front steering system is α; and
neglecting the internal transmission efficiency of a transmission system, the following approximate theoretical formula may be derived according to the moment of momentum theorem of the steering system: *T*_{T} + *T*_{E} + *T*_{Z} + *T*_{f} ≈ *Jₛα,*
where there is a definite relationship between the ground friction resistance torque, road surface adhesion, and a front steering angular velocity. If the user rotates the front steering system with the same torque, the road surface adhesion is higher, resulting in a greater ground friction resistance torque and a correspondingly smaller front steering angular acceleration. Thus, the magnitude of the road surface adhesion can be indirectly determined according to the front steering angular acceleration.

For a control system for the front steering system, which employs the steer-by-wire system, under a stationary condition after the vehicle startup, the front steering system may be automatically controlled for steering, thereby achieving automatic identification of the road surface adhesion. Compared with a theoretical formula for the non-steer-by-wire system, the torque *T*_{T} applied by the driver to the steering wheel is zero, and the assist torque *T*_{E} directly serves as the steering torque. The corresponding approximate theoretical formula is as follows: *T*_{E} *+ T_{Z} + T*_{f} ≈ *Jₛα.*

Step 2: Determine estimation upper and lower limits using the uniform seeding method.

A specific implementation method is shown in Fig. 4, including:
Step 21: Initialize and calculate seeded friction coefficients.

Within the friction parameter range of 0.1 to 1.1, different peak adhesion coefficients are selected by seeding at fixed intervals (e.g., Seeds = 0.1, 0.3, 0.5, 0.7, 0.9, 1.1). These adhesion coefficients are then input into the HSRI tire model for calculation to determine conditions of wheel ends *Fₓ, F_{y}* under the current wheel-end vertical load *F_{z}*, the wheel-end longitudinal slip rate λ, the tire side-slip angle *α*, and seeded peak adhesion coefficient road surface conditions.

Step 22: Determine an adhesion coefficient estimated range under a low slip rate.

When the longitudinal slip rate of a target wheel is less than 3%, longitudinal forces at the wheel ends calculated for each seeded point are almost identical. That is, regardless of whether the peak adhesion coefficient used is 0.1 or 1.1, there is no significant difference in the performance of the longitudinal forces at the wheel ends. Due to the inability of the seeding method to effectively distinguish differences in different adhesion coefficients under the low slip rate, the seeding method lacks the capability to differentiate upper and lower limits, and a default estimated range for the adhesion coefficient output is [0.1, 1.1].

Step 23: Perform self-separation detection and analysis on a seeding curve.

By comparing relative errors between the wheel-end longitudinal force *F_{x,i}* at each seeded point (i = 0.1, ..., 0.9) and the longitudinal force *F*_{*x,*1.1} calculated when the adhesion coefficient is 1.1, when the error exceeds the preset threshold, it indicates that the adhesion coefficient at this seeded point begins to self-separate.

The self-separation phenomenon typically emerges first at points with low adhesion coefficients and gradually spreads to points with high adhesion coefficients. When more than two instances of self-separation occur, it is considered that the seeding curve exhibits significant self-separation. In this case, more precise upper and lower limits for the peak adhesion coefficient estimation can be provided.

Step 24: Determine upper and lower limits for the peak adhesion coefficient based on the self-separation phenomenon.

If it is determined that the seeding curve exhibits self-separation, reasonable upper and lower limits for the peak adhesion coefficient are determined based on the wheel-end longitudinal force *F_{x_whlDyn}* calculated using the dynamic equilibrium equation for single-wheel drive or braking torque, combined with the distribution of the seeding curve.

Step 25: Perform consistency adjustment on upper and lower limits of peak adhesion coefficients for a front wheel and a rear wheel on the same side of a four-wheel-drive vehicle.

For the four-wheel-drive vehicle, consistency in the upper and lower limits of the peak adhesion coefficients for the front wheel and the rear wheel on the same side needs to be ensured. By real-time calculation of variances of the seeding curves of the front wheel and the rear wheel at the same moment, the upper and lower limits of the curve with the larger variance are selected as limit values for adhesion on that side, as this indicates more pronounced self-separation in that curve and facilitates more accurate estimation of the upper and lower limits.

Step 26: Fuse the utilized adhesion coefficient for optimizing estimated lower limit µ*ₘᵢₙ.*

Further consideration is given to an estimated value of the utilized adhesion coefficient to ensure that the estimated lower limit of the peak adhesion is not less than a value of an adhesion coefficient actually utilized by the vehicle at present. The lower limit determined by the seeding method is compared with the value of the current utilized adhesion coefficient, and the larger value is selected as a final estimated lower limit to enhance the rationality and reliability of the peak adhesion coefficient estimation.

Step 3: Determine a reference adhesion coefficient µ*_{base}* based on the utilized adhesion coefficient.

On the basis of determining the self-separation of the seeding curve and estimating the upper and lower limits using the seeding method, the utilized adhesion coefficient is calculated in real time and a semi-empirical tire-road surface mathematical model: $μ \left(s\right) = {C}_{1} \left(1-{e}^{- {C}_{2} s}\right) - {C}_{3} s .$

As shown in Table 1, parameter values (C1, C2, and C3) and peak adhesion coefficients for six types of road surfaces are obtained. By comparing the proximity between the currently calculated utilized adhesion coefficient and the utilized adhesion coefficients of various characteristic road surfaces, a reasonable reference peak adhesion coefficient is obtained. The step 3 is only aimed at determining a reference adhesion coefficient value for scenarios with low slip rates where no separation occurs in the seeding curve; and if separation exists in the seeding curve, an average value of the upper and lower limits of the peak adhesion coefficient is used as the reference adhesion coefficient.

**Table 1**

| **Pavement** | *C*₁ | *C*₂ | *C*₃ | *µₘₐₓ* |
|---|---|---|---|---|
| Dry Asphalt | 1.2801 | 23.9900 | 0.5200 | 1.1700 |
| Dry Cement | 1.1973 | 25.1680 | 0.5373 | 1.0900 |
| Wet Asphalt | 0.8570 | 33.8220 | 0.3470 | 0.8013 |
| Wet Gravel | 0.4004 | 33.7080 | 0.1204 | 0.3400 |
| Snow | 0.1946 | 94.1290 | 0.0646 | 0.1907 |
| Ice | 0.0500 | 306.3900 | 0.0000 | 0.0500 |

Step 4: Estimate left and right wheel peak adhesion coefficients based on the MHE algorithm.

A measurement equation is established based on a three-degree-of-freedom vehicle dynamic model.

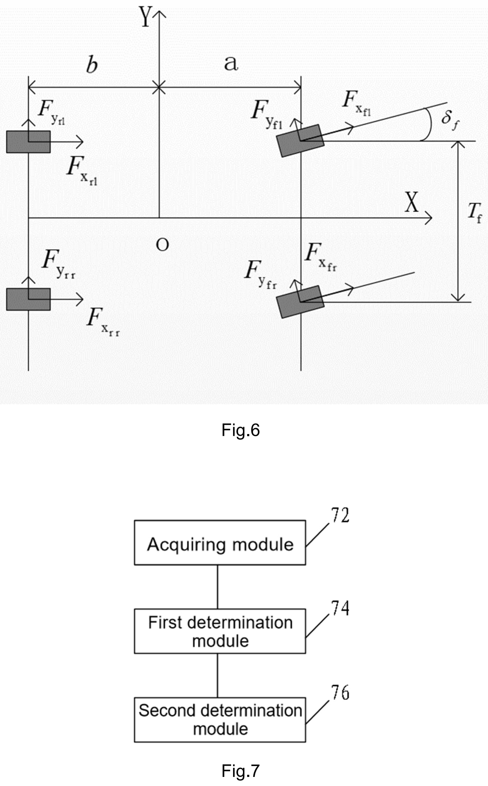

As shown in Fig. 6, the three-degree-of-freedom vehicle dynamic model is: ${a}_{x} = \left[\begin{matrix}\left({F}_{{x}_{f 1}}⋅{cosδ}_{f}-{F}_{{y}_{f 1}}⋅{sinδ}_{f}\right) + \left({F}_{{x}_{fr}}⋅{cosδ}_{f}-{F}_{{y}_{fr}}⋅{sinδ}_{f}\right) + \\ \left({F}_{{x}_{r 1}}⋅{cosδ}_{r}-{F}_{{y}_{r 1}}⋅{sinδ}_{r}\right) + \left({F}_{{x}_{rr}}⋅{cosδ}_{r}-{F}_{{y}_{rr}}⋅{sinδ}_{r}\right)\end{matrix}\right] .$ ${a}_{y} = \left[\begin{matrix}\left({F}_{{x}_{f 1}}⋅{sinδ}_{f}+{F}_{{y}_{f 1}}⋅{cosδ}_{f}\right) + \left({F}_{{x}_{fr}}⋅{sinδ}_{f}-{F}_{{y}_{fr}}⋅{cosδ}_{f}\right) + \\ \left({F}_{{x}_{r 1}}⋅{sinδ}_{r}+{F}_{{y}_{r 1}}⋅{cosδ}_{r}\right) + \left({F}_{{x}_{rr}}⋅{sinδ}_{r}-{F}_{{y}_{rr}}⋅{cosδ}_{r}\right)\end{matrix}\right] ;$ and $\dot{γ} = \frac{1}{I} \left\{\begin{matrix}\left[a\left({F}_{{x}_{f 1}}⋅{sinδ}_{f}+{F}_{{y}_{f 1}}⋅{cosδ}_{f}\right)+\frac{{T}_{f}}{2}\left({F}_{{x}_{f 1}}⋅{cosδ}_{f}-{F}_{{y}_{f 1}}⋅{sinδ}_{f}\right)\right] + \\ \left[a\left({F}_{{x}_{fr}}⋅{sinδ}_{f}-{F}_{{y}_{fr}}⋅{cosδ}_{f}\right)+\frac{{T}_{f}}{2}\left({F}_{{x}_{fr}}⋅{cosδ}_{f}-{F}_{{y}_{fr}}⋅{sinδ}_{f}\right)\right] + \\ \left[a\left({F}_{{x}_{r 1}}⋅{sinδ}_{r}+{F}_{{y}_{r 1}}⋅{cosδ}_{r}\right)+\frac{{T}_{f}}{2}\left({F}_{{x}_{r 1}}⋅{cosδ}_{r}-{F}_{{y}_{r 1}}⋅{sinδ}_{r}\right)\right] + \\ \left[a\left({F}_{{x}_{rr}}⋅{sinδ}_{r}-{F}_{{y}_{rr}}⋅{cosδ}_{r}\right)+\frac{{T}_{f}}{2}\left({F}_{{x}_{rr}}⋅{cosδ}_{r}-{F}_{{y}_{rr}}⋅{sinδ}_{r}\right)\right]\end{matrix}\right\}$

*aₓ* denotes a longitudinal acceleration of the entire vehicle, *a_{y}* denotes a lateral acceleration, *γ̇* denotes a yaw angular acceleration, *δ_{f}* denotes a steering angle of the front wheel, *δᵣ* denotes a steering angle of the rear wheel, a and b denote distances from front and rear axles to a center of mass, respectively, and left and right wheel tracks; and *F_{xᵢ}, F_{yᵢ}*(*i* = *fl, fr, rl, rr*) denote longitudinal and lateral tire forces of the four wheels, respectively. It should be noted that in practical applications, the rear wheels generally do not steer, such that the steering angle *δr* of the rear wheels is actually zero, which is not shown in Fig. 6. State variables to be estimated are left and right peak adhesion coefficients [*µₗ µᵣ*]*^{T}*, and observed variables are [*aₓ a_{y} ṙ*]^{T}; and a sampling window length for the MHE is defined as N. Assuming that at each sampling instant i (i=k-N...k), there is a relationship between a measured value *yᵢ* and a state variable to be optimized *µ_{l_i}*, *µ_{r_i},* namely x(i) as follows: $y \left(k\right) = h \left(x\left(k\right),u\left(k\right)\right) + {v}_{y} ,$ where *v_{y}* denotes measurement noise, and h(x(k), *u*(*k*)) denotes the measurement equation, which is used to establish a relationship between an estimated state variable x(k) and an observed variable y(k) at the instant k, and may be derived based on the above-mentioned three-degree-of-freedom dynamic equations. The MHE optimization problem aims to find, within the window time N, an optimal control input *uᵢ*(*i = k - N +* 1 ... *k*) that minimizes a total cost function *J_{N}*(*x, u*) calculated for the state variable *xᵢ = x*_{*i*-1} + *uᵢ*(*i = k - N +* 1 ...*k*) over a period of time. The selection of an optimization window is adjusted according to the computing power of the controller and actual situations. Taking a sampling period of 10 ms as an example, the general reference value for N is 50 to 80.

The cost function and constraints for the optimization problem are formulated as follows: ${J}_{N \left(x, u\right)} = {\sum }_{i = k - N}^{k} {\left‖y\left(i\right)-h\left(x\left(i\right)\right)\right‖}_{R}^{2} + {\sum }_{i = k - N}^{k - 1} {\left‖u\left(i\right)\right‖}_{Q}^{2} + {\sum }_{i = k - N}^{k} {\left‖x\left(i\right)-{x}_{Base}\left(i\right)\right‖}_{P}^{2} ;$ ${minJ}_{N} \left(x, u\right) ;$ $s . t : x \left(k+1\right) = x \left(k-N\right) + {\sum }_{i = k - N}^{k} u \left(i\right) ;$ $y \left(k\right) = h \left(x\left(k\right)\right) + {v}_{y} ;$ $\left[\begin{matrix}{μ}_{l _ min} \\ {μ}_{r _ min}\end{matrix}\right] \leq x \left(k+1\right) \leq \left[\begin{matrix}{μ}_{l _ max} \\ {μ}_{r _ max}\end{matrix}\right] ∘$

Finally, the cost function is minimized to obtain the target road surface adhesion coefficient *µ_{l_est}* and *µ_{r_est}.*

According to the descriptions of the above-mentioned implementations, those skilled in the art can clearly know that the method according to the above-mentioned embodiments may be implemented by software and a necessary general-purpose hardware platform, and certainly, may also be implemented by hardware, but the former is a preferred implementation in many cases. Based on such an understanding, the technical solutions of the present invention essentially, or the part contributing to the prior art may be presented in the form of a software product. The computer software product is stored in a storage medium (e.g., a ROM (Read-Only Memory)/RAM (Random Access Memory), a magnetic disk, and an optical disc), and includes several instructions to cause a terminal device (e.g., a mobile phone, a computer, a server, or a network device) to perform the methods described in the embodiments of the present invention.

In the present embodiment, an apparatus for determining a road surface adhesion coefficient is further provided. The apparatus is used to implement the above-mentioned embodiments and preferred implementations, and details that have been described are not repeated. The term "module" used as below may implement a combination of software and/or hardware with preset functions. An apparatus described in the following embodiments is preferably implemented by the software, but it is possible and conceivable for implementing the apparatus through the hardware or a combination of the software and the hardware.

Fig. 7 is a structural block diagram of an apparatus for determining a road surface adhesion coefficient according to an embodiment of the present invention. As shown in Fig. 7, the apparatus includes:
an acquiring module 72, configured to acquire an initial road surface adhesion coefficient for a target vehicle in a case where the target vehicle is in a target state;
a first determination module 74, configured to determine an upper limit and a lower limit of the road surface adhesion coefficient for the target vehicle using a target algorithm, and determine a reference road surface adhesion coefficient for the target vehicle according to the upper limit and the lower limit; and
a second determine module 76, configured to minimize a cost function corresponding to the target vehicle according to the initial road surface adhesion coefficient and the reference road surface adhesion coefficient to determine a target road surface adhesion coefficient for the target vehicle.

Through the above-mentioned apparatus, in the case where the target vehicle is in the target state, the initial road surface adhesion coefficient for the target vehicle is acquired; the upper limit and the lower limit of the road surface adhesion coefficient for the target vehicle are determined using the target algorithm, and the reference road surface adhesion coefficient for the target vehicle is determined according to the upper limit and the lower limit; and the cost function corresponding to the target vehicle is minimized according to the initial road surface adhesion coefficient and the reference road surface adhesion coefficient to determine the target road surface adhesion coefficient for the target vehicle. In the embodiments of the present invention, not only is an effective initial estimate and an upper-lower limit range provided, but also, through the introduction of a reference value and the setting of optimization objectives, it ensures that the algorithm can continuously and accurately update the estimation of the road surface adhesion coefficient under various complex and changing driving conditions, providing more reliable data support for vehicle traction control, stability control, etc. Therefore, the problem of low accuracy in the current algorithm for identifying the road surface adhesion coefficient when facing the effective estimation of untrained road surfaces and low-slip-rate conditions can be solved.

In an exemplary embodiment, the acquiring module is configured to control, in a case where a steering system of the target vehicle adopts a first steering mode, the steering system to output a target steering torque, to control front wheels of the target vehicle to execute a steering motion; after the front wheels of the target vehicle execute the steering motion, acquire a moment of inertia, an angular acceleration, a self-aligning torque, and an assist torque of the steering system; and determine a ground friction resistance torque according to the moment of inertia, the angular acceleration, the self-aligning torque, and the assist torque of the steering system, and determine the initial road surface adhesion coefficient according to the ground friction resistance torque.

In an exemplary embodiment, the first steering mode is a steer-by-wire mode, the steering system of the target vehicle is a steer-by-wire system, and the acquiring module is configured to determine the ground friction resistance torque through the following formula: ${J}_{s} α - \left({T}_{E}+{T}_{Z}\right) \approx {T}_{f} ,$ where *J*ₛ denotes the moment of inertia, *α* denotes the angular acceleration, *T*_{E} denotes the assist torque, *T*_{Z} denotes the self-aligning torque, and *T*_{f} denotes the ground friction resistance torque;
where *T*_{Z} and *T*_{f} are resistance torques having negative values in the formula, and the assist torque *T*_{E} provides a steering torque for driving the front wheels to execute the steering motion.

In an exemplary embodiment, the acquiring module is configured to acquire a moment of inertia, an angular acceleration, a self-aligning torque, and an assist torque of the steering system, and a steering wheel torque of the target vehicle after the steering system of the target vehicle adopts a second steering mode and the front wheels of the target vehicle are manually controlled to execute the steering motion; and determine a ground friction resistance torque according to the moment of inertia, the angular acceleration, and the assist torque of the steering system and the steering wheel torque of the target vehicle, and determine the initial road surface adhesion coefficient according to the ground friction resistance torque.

In an exemplary embodiment, the acquiring module is configured to determine the ground friction resistance torque through the following formula: ${J}_{s} α - \left({T}_{T}+{T}_{E}+{T}_{Z}\right) \approx {T}_{f} ,$ where *J*ₛ denotes the moment of inertia, *α* denotes the angular acceleration, *T*_{T} denotes the steering wheel torque, *T*_{E} denotes the assist torque, *T*_{Z} denotes the self-aligning torque, and *T*_{f} denotes the ground friction resistance torque.

In an exemplary embodiment, the acquiring module is configured to determine the initial road surface adhesion coefficient through the following formula: ${T}_{f} = \frac{f}{3} \sqrt{\frac{{G}^{3}}{P}} ,$ where *T*_{f} denotes the ground friction resistance torque, f denotes the initial road surface adhesion coefficient, G denotes an axle load of the target vehicle, and P denotes a tire pressure of the target vehicle.

In an exemplary embodiment, the first determination module is configured to acquire a wheel-end vertical load, a wheel-end longitudinal slip rate, and a tire side-slip angle of wheels of the target vehicle, and a plurality of friction coefficients, where the plurality of friction coefficients are obtained by uniform seeding within a target friction parameter range at certain intervals; calculate a wheel-end longitudinal force corresponding to each friction coefficient according to the wheel-end vertical load, the wheel-end longitudinal slip rate, the tire side-slip angle, and the plurality of friction coefficients; determine a longitudinal force curve according to the wheel-end longitudinal force corresponding to each friction coefficient; and determine an upper limit and a lower limit of the road surface adhesion coefficient for the target vehicle according to the longitudinal force curve.

In an exemplary embodiment, the first determination module is configured to determine whether self-separation is present in the longitudinal force curve; in a case where self-separation is present in the longitudinal force curve, determine a target wheel-end longitudinal force of the target vehicle according to a dynamic equilibrium equation; and determine a position of the target wheel-end longitudinal force on the longitudinal force curve and determine an upper limit and a lower limit of the road surface adhesion coefficient according to this position.

In an exemplary embodiment, the first determination module is configured to determine, in a case where self-separation is not present in the longitudinal force curve, a utilized adhesion coefficient for the target vehicle; determine distances between the utilized adhesion coefficient and respective utilized adhesion coefficients corresponding to a plurality of characteristic road surfaces; determine a characteristic road surface with the smallest distance and determine a peak adhesion coefficient of the characteristic road surface with the smallest distance; and determine the peak adhesion coefficient as the reference road surface adhesion coefficient.

In an exemplary embodiment, the first determination module is configured to determine a wheel-end longitudinal force corresponding to a target friction coefficient, where the target friction coefficient is one friction coefficient of the plurality of friction coefficients; calculate error values between wheel-end longitudinal forces corresponding to other friction coefficients and the wheel-end longitudinal force corresponding to the target friction coefficient, respectively, where the other friction coefficients are friction coefficients in the plurality of friction coefficients excluding the target friction coefficient; determine the number of the error values greater than a preset error value; in a case where the number is greater than a preset threshold, determine that self-separation is present in the longitudinal force curve; and in a case where the number is less than or equal to the preset threshold, determine that self-separation is not present in the longitudinal force curve.

In an exemplary embodiment, the second determination module is configured to establish a measurement equation according to a dynamic model of the target vehicle; determine an observation error penalty for the cost function according to the measurement equation, determine a control input penalty for the cost function according to control inputs of the target vehicle, and determine a reference deviation penalty for the cost function according to state variables of the target vehicle; and establish the cost function according to the observation error penalty, the control input penalty, and the reference deviation penalty.

In an exemplary embodiment, the second determination module is configured to determine the observation error penalty term for the cost function according to an actual observed value of the target vehicle and a current road surface adhesion coefficient, determine the control input penalty term for the cost function according to input values of the target vehicle, and determine the reference deviation penalty for the cost function according to a predicted observed value of the target vehicle and the reference road surface adhesion coefficient; and establish the cost function according to the observation error penalty term, the control input penalty term, and the reference deviation penalty term, and establishing constraints for the cost function, where the constraints include: a state variable update constraint term, an observation model constraint term, and upper and lower limit constraint terms for the road surface adhesion coefficient.

It should be noted that the above-mentioned modules may be implemented through software or the hardware, and for the latter, the modules may be implemented by following manners including but not limited to: the above-mentioned modules are all located in the same processor; or the above-mentioned modules are respectively located in different processors in the form of any combination.

An embodiment of the present invention further provides a computer-readable storage medium, and the computer-readable storage medium has a computer program stored therein. The computer program is configured to perform the steps in any one of the above-mentioned method embodiments during operation.

Optionally, in the present embodiment, the above-mentioned storage medium may be configured to store program code for performing the following steps:
S1: Acquire an initial road surface adhesion coefficient for a target vehicle in a case where the target vehicle is in a target state.
S2: Determine an upper limit and a lower limit of the road surface adhesion coefficient for the target vehicle using a target algorithm, and determine a reference road surface adhesion coefficient for the target vehicle according to the upper limit and the lower limit.
S3: Minimize a cost function corresponding to the target vehicle according to the initial road surface adhesion coefficient and the reference road surface adhesion coefficient to determine a target road surface adhesion coefficient for the target vehicle.

In an exemplary embodiment, the above-mentioned computer-readable storage medium may include, but is not limited to: a U disk, a Read-Only Memory (ROM for short), a Random Access Memory (RAM for short), a mobile hard disk, a magnetic disk, a compact disc, or other media capable of storing computer programs.

An embodiment of the present invention further provides an electronic device including a memory and a processor. The memory has a computer program stored therein. The processor is configured to run the computer program to perform the steps of any one of the above-mentioned method embodiments.

In an exemplary embodiment, the above-mentioned electronic device may further include a transmission device and an input/output device, where the transmission device is connected to the above-mentioned processor, and the input/output device is connected to the above-mentioned processor.

Optionally, in the present embodiment, the above-mentioned processor may be configured to perform the following steps through the computer program:
S1: Acquire an initial road surface adhesion coefficient for a target vehicle in a case where the target vehicle is in a target state.
S2: Determine an upper limit and a lower limit of the road surface adhesion coefficient for the target vehicle using a target algorithm, and determine a reference road surface adhesion coefficient for the target vehicle according to the upper limit and the lower limit.
S3: Minimize a cost function corresponding to the target vehicle according to the initial road surface adhesion coefficient and the reference road surface adhesion coefficient to determine a target road surface adhesion coefficient for the target vehicle.

An embodiment of the present invention further provides a computer program product. The above-mentioned computer program product includes a computer program. The computer program, when executed by a processor, causes the steps in any one of the above-mentioned method embodiments to be implemented.

An embodiment of the present invention also provides another computer program product, which includes a non-volatile computer-readable storage medium. The non-volatile computer-readable storage medium stores a computer program, and the computer program, when executed by a processor, causes the steps in any one of the above-mentioned method embodiments to be implemented.

An embodiment of the present invention further provides a computer program, including computer instructions. The computer instructions are stored in a computer-readable storage medium. A processor of a computer device reads the computer instructions from the computer-readable storage medium, and the processor executes the computer instructions to cause the computer device to perform the steps in any one of the above-mentioned method embodiments.

Optionally, in the present embodiment, the above-mentioned processor may be configured to perform the following steps through the computer program:
S1: Acquire an initial road surface adhesion coefficient for a target vehicle in a case where the target vehicle is in a target state.
S2: Determine an upper limit and a lower limit of the road surface adhesion coefficient for the target vehicle using a target algorithm, and determine a reference road surface adhesion coefficient for the target vehicle according to the upper limit and the lower limit.
S3: Minimize a cost function corresponding to the target vehicle according to the initial road surface adhesion coefficient and the reference road surface adhesion coefficient to determine a target road surface adhesion coefficient for the target vehicle.

For specific examples in the present embodiment, reference may be made to the examples described in the above-mentioned embodiments and the exemplary implementations, and details are not further provided in the present embodiment.

Apparently, those skilled in the art should understand that the modules or the steps in the present invention described above may be implemented through a general-purpose computing apparatus, may be centralized on a single computing apparatus or distributed on a network formed by a plurality of computing apparatuses, may be implemented using program code executable by the computing apparatus, and then, may be stored in a storage apparatus for execution by the computing apparatus. In some cases, the steps shown or described may be performed in an order different from that presented herein, or may be implemented as separate produced integrated circuit modules, or a plurality of modules or steps among them may be implemented as a single produced integrated circuit module. Thus, the present invention is not limited to any specific combination of hardware and software.

The above-mentioned contents are merely preferred embodiments of the present invention and are not used to limit the present invention, and the present invention may be variously modified and changed for those skilled in the art. Any modification, equivalent replacement, improvement, etc. made within the principle of the present invention shall fall within the scope of protection of the present invention.

## Claims

1. A method for determining a road surface adhesion coefficient, comprising:
acquiring (S202) an initial road surface adhesion coefficient for a target vehicle in response to the target vehicle is in a target state;
determining (S204) an upper limit and a lower limit of the road surface adhesion coefficient for the target vehicle using a target algorithm, and determining a reference road surface adhesion coefficient for the target vehicle according to the upper limit and the lower limit; and
minimizing (S206) a cost function corresponding to the target vehicle according to the initial road surface adhesion coefficient and the reference road surface adhesion coefficient to determine a target road surface adhesion coefficient for the target vehicle.

2. **The** method according to claim 1, wherein the acquiring an initial road surface adhesion coefficient for a target vehicle comprises:
in response to a steering system of the target vehicle adopts a first steering mode, controlling the steering system to output a target steering torque to control front wheels of the target vehicle to execute a steering motion;
after the front wheels of the target vehicle execute the steering motion, acquiring a moment of inertia, an angular acceleration, a self-aligning torque, and an assist torque of the steering system; and
determining a ground friction resistance torque according to the moment of inertia, the angular acceleration, the self-aligning torque, and the assist torque of the steering system, and determining the initial road surface adhesion coefficient according to the ground friction resistance torque.

3. The method according to claim 2, wherein the first steering mode is a steer-by-wire mode, the steering system of the target vehicle is a steer-by-wire system, and wherein the determining a ground friction resistance torque according to the moment of inertia, the angular acceleration, the self-aligning torque, and the assist torque of the steering system comprises:
determining the ground friction resistance torque through the following formula: ${J}_{s} α - \left({T}_{E}+{T}_{Z}\right) \approx {T}_{f} ,$ wherein *J*ₛ denotes the moment of inertia, *α* denotes the angular acceleration, *T*_{E} denotes the assist torque, *T*_{Z} denotes the self-aligning torque, and *T*_{f} denotes the ground friction resistance torque;
wherein *T*_{Z} and *T*_{f} are resistance torques having negative values in the formula, and the assist torque *T*_{E} provides a steering torque for driving the front wheels to execute the steering motion.

4. The method according to claim 1, wherein the acquiring an initial road surface adhesion coefficient for a target vehicle comprises:
in response to a steering system of the target vehicle adopts a second steering mode, and after front wheels of the target vehicle are manually controlled to execute a steering motion, acquiring a moment of inertia, an angular acceleration, a self-aligning torque, and an assist torque of the steering system, and a steering wheel torque of the target vehicle; and
determining a ground friction resistance torque according to the moment of inertia, the angular acceleration, and the assist torque of the steering system and the steering wheel torque of the target vehicle, and determining the initial road surface adhesion coefficient according to the ground friction resistance torque.

5. The method according to claim 4, wherein the determining a ground friction resistance torque according to the moment of inertia, the angular acceleration, and the assist torque of the steering system and the steering wheel torque of the target vehicle comprises:
determining the ground friction resistance torque through the following formula: ${J}_{s} α - \left({T}_{T}+{T}_{E}+{T}_{Z}\right) \approx {T}_{f} ,$ wherein *J*ₛ denotes the moment of inertia, *α* denotes the angular acceleration, *T*_{T} denotes the steering wheel torque, *T*_{E} denotes the assist torque, *T*_{Z} denotes the self-aligning torque, and *T*_{f} denotes the ground friction resistance torque.

6. The method according to any one of claims 2 to 5, wherein the determining the initial road surface adhesion coefficient according to the ground friction resistance torque comprises:
determining the initial road surface adhesion coefficient through the following formula: ${T}_{f} = \frac{f}{3} \sqrt{\frac{{G}^{3}}{P}} ,$ wherein *T*_{f} denotes the ground friction resistance torque, f denotes the initial road surface adhesion coefficient, G denotes an axle load of the target vehicle, and P denotes a tire pressure of the target vehicle.

7. The method according to claim 1, wherein the determining an upper limit and a lower limit of the road surface adhesion coefficient for the target vehicle using a target algorithm comprises:
acquiring a wheel-end vertical load, a wheel-end longitudinal slip rate, and a tire side-slip angle of wheels of the target vehicle, and a plurality of friction coefficients, wherein the plurality of friction coefficients are obtained by uniform seeding within a target friction parameter range at certain intervals;
calculating a wheel-end longitudinal force corresponding to each friction coefficient according to the wheel-end vertical load, the wheel-end longitudinal slip rate, and the tire side-slip angle, and the plurality of friction coefficients;
determining a longitudinal force curve according to the wheel-end longitudinal force corresponding to each friction coefficient; and
determining the upper limit and the lower limit of the road surface adhesion coefficient for the target vehicle according to the longitudinal force curve.

8. The method according to claim 7, wherein the determining the upper limit and the lower limit of the road surface adhesion coefficient for the target vehicle according to the longitudinal force curve comprises:
determining whether self-separation is present in the longitudinal force curve;
in response to self-separation is present in the longitudinal force curve, determining a target wheel-end longitudinal force of the target vehicle according to a dynamic equilibrium equation; and
determining a position of the target wheel-end longitudinal force on the longitudinal force curve and determining the upper limit and the lower limit of the road surface adhesion coefficient according to the position.

9. **The** method according to claim 8, wherein after the determining whether self-separation is present in the longitudinal force curve, the method further comprises:
determining, in response to self-separation is not present in the longitudinal force curve, a utilized adhesion coefficient for the target vehicle;
determining distances between the utilized adhesion coefficient and respective utilized adhesion coefficients corresponding to a plurality of characteristic road surfaces;
determining a characteristic road surface with the smallest distance and determining a peak adhesion coefficient of the characteristic road surface with the smallest distance; and
determining the peak adhesion coefficient as the reference road surface adhesion coefficient.

10. **The** method according to claim 8, wherein the determining whether self-separation is present in the longitudinal force curve comprises:
determining a wheel-end longitudinal force corresponding to a target friction coefficient, wherein the target friction coefficient is one friction coefficient of the plurality of friction coefficients;
calculating error values between wheel-end longitudinal forces corresponding to other friction coefficients and the wheel-end longitudinal force corresponding to the target friction coefficient, respectively, wherein the other friction coefficients are friction coefficients in the plurality of friction coefficients excluding the target friction coefficient; determining the number of the error values greater than a preset error value;
in response to the number is greater than a preset threshold, determining that self-separation is present in the longitudinal force curve; and
in response to the number is less than or equal to the preset threshold, determining that self-separation is not present in the longitudinal force curve.

11. The method according to claim 1, wherein before the minimizing a cost function corresponding to the target vehicle according to the initial road surface adhesion coefficient and the reference road surface adhesion coefficient to determine a target road surface adhesion coefficient for the target vehicle, the method further comprises:
establishing a measurement equation according to a dynamic model of the target vehicle;
determining an observation error penalty for the cost function according to the measurement equation, determining a control input penalty for the cost function according to control inputs of the target vehicle, and determining a reference deviation penalty for the cost function according to state variables of the target vehicle; and
establishing the cost function according to the observation error penalty, the control input penalty, and the reference deviation penalty.

12. The method according to claim 11, wherein before the minimizing a cost function corresponding to the target vehicle according to the initial road surface adhesion coefficient and the reference road surface adhesion coefficient to determine a target road surface adhesion coefficient for the target vehicle, the method further comprises:
determining the observation error penalty term for the cost function according to an actual observed value of the target vehicle and a current road surface adhesion coefficient, determining the control input penalty term for the cost function according to input values of the target vehicle, and determining the reference deviation penalty term for the cost function according to a predicted observed value of the target vehicle and the reference road surface adhesion coefficient; and
establishing the cost function according to the observation error penalty term, the control input penalty term, and the reference deviation penalty term, and establishing constraints for the cost function, wherein the constraints comprise: a state variable update constraint term, an observation model constraint term, and upper and lower limit constraint terms for the road surface adhesion coefficient.

13. An apparatus for determining a road surface adhesion coefficient, comprising:
an acquiring module (72), configured to acquire an initial road surface adhesion coefficient for a target vehicle in response to the target vehicle is in a target state;
a first determination module (74), configured to determine an upper limit and a lower limit of the road surface adhesion coefficient for the target vehicle using a target algorithm, and determine a reference road surface adhesion coefficient for the target vehicle according to the upper limit and the lower limit; and
a second determine module (76), configured to minimize a cost function corresponding to the target vehicle according to the initial road surface adhesion coefficient and the reference road surface adhesion coefficient to determine a target road surface adhesion coefficient for the target vehicle.

14. A computer-readable storage medium, comprising a stored program, wherein the program, when running, causes the method according to any one of claims 1 to 12 to be performed.

15. An electronic device, comprising a memory and a processor, wherein the memory has a computer program stored therein, and the processor is configured to perform the method according to any one of claims 1 to 12 through the computer program.
